Europäisches Patentamt

European Patent Office

Office européen des brevets

(19)

(11) **EP 0 873 011 B1**

(12) **EUROPÄISCHE PATENTSCHRIFT**

(45) Veröffentlichungstag und Bekanntmachung des Hinweises auf die Patenterteilung:
**17.11.2004 Patentblatt 2004/47**

(51) Int Cl.⁷: **H04N 5/33**, H04N 5/217

(21) Anmeldenummer: **98106137.7**

(22) Anmeldetag: **03.04.1998**

(54) **Verfahren zum Korrigieren der Grauwerte von Bildern einer digitalen Infrarot-Kamera**

Method for correcting grey scale values in images of a digital infrared camera

Procédé de correction des valeurs d'échelle de gris des images d'une caméra numérique à infrarouge

(84) Benannte Vertragsstaaten:
**FR GB IT NL**

(30) Priorität: **17.04.1997 DE 19715983**

(43) Veröffentlichungstag der Anmeldung:
**21.10.1998 Patentblatt 1998/43**

(73) Patentinhaber: **AEG Infrarot-Module GmbH**
**74072 Heilbronn (DE)**

(72) Erfinder:
• **Breiter, Rainer**
**74081 Heilbronn (DE)**

• **Cabanski, Wolfgang, Dr.**
**74072 Heilbronn (DE)**

(74) Vertreter: **Kolb, Georg et al**
**DaimlerChrysler AG**
**Intellectual Property Management**
**IPM, C106**
**70546 Stuttgart (DE)**

(56) Entgegenhaltungen:
**EP-A- 0 653 882**          **WO-A-97/05742**
**US-A- 4 975 864**          **US-A- 5 514 865**

**Beschreibung**

Die AIM AEG Infrarot Module GmbH fertigt seit den siebziger Jahren hochwertige Infrarotdetektoren mit den dazugehörigen Komponenten wie Kühler und Ausleseelektronik. Eingesetzt werden die Detektoren im militärischen Bereich, in Forschung, Medizin und Industrie. Bei den Detektoren der neuesten Generation sind die Einzelelemente in einer zweidimensionalen Struktur in der Fläche angeordnet und benötigen keinen mechanischen Scanner zur Bilderzeugung mehr. Bei dem zweidimensionalen Detektor kann eine Szene direkt durch eine geeignete Optik auf den photosensitiven Chip abgebildet werden. Die Einzelelemente werden seriell ausgelesen und durch die weitere elektronische Datenverarbeitung wieder zu einer zweidimensionalen Datenstruktur, einem Bild, zusammengesetzt.

Durch die technologisch bedingte Inhomogenität des Detektors in den Einzelelementen entsteht ein Abbildungsfehler. Es treten sowohl zeitinvariante als auch zeitvariante Inhomogenitäten auf. Bei den bisherigen Zeilenkameras mit einer eindimensionalen Detektorstruktur ist das Problem dadurch gelöst, daß der Detektor beim Abscannen der Szene regelmässig in eine Referenzquelle schaut, und dann mit dieser Information neu kalibriert wird. Dieses Verfahren ist übertragen auf einen Detektor mit einer zweidimensionalen Struktur wegen des grossen Aufwandes in der Praxis nicht durchführbar. Die Korrektur der zeitinvarianten Inhomogenitäten bei zweidimensionalen Detektoren kann durch eine einmalige Kalibrierung an einer thermischen Referenzquelle erfolgen. Es wäre weiterhin möglich, die zeitvarianten Inhomogenitäten dann durch eine Nachkalibrierung an einer thermischen Referenzquelle durch den Anwender durchführen zu lassen. Diesen Aufwand gilt es zu vermeiden.

Aus US 4,975,864 ist eine digitale Infrarot-Kamera mit einem zweidimensionalen Detektor bekannt, bei dem mittels in einem Speicher abgelegten Korrekturwerte die einzelnen Grauwerte jedes erfassten Bildpunktes korrigiert werden. Die so erzeugten korrigierten Grauwerte werden verschiedenen Medianfiltern zugeführt wobei auf der Basis vorgegebener Kriterien mittels eines Prozessors ein von diesen Medianfiltern erzeugtes Ausgangssignal ausgewählt wird, um damit die Korrekturfaktoren derart zu verändern, dass die Kompensation von Abbildungsfehlern verbessert wird.

Aufgabe der Erfindung ist es daher ein Verfahren zum Korrigieren der Grauwerte von Bildern einer digitalen Infrarot-Kamera mit einem zweidimensionalen Detektor anzugeben, das im wesentlichen automatisch abläuft und bei dem auch die zeitvarianten Inhomogenitäten des Detektors ausgeglichen werden.

Diese Aufgabe wird durch ein Verfahren mit den Merkmalen des unabhängigen Anspruches gelöst. Die weitere Ausgestaltung der Verfahren erfolgt gemäss den Merkmalen der abhängigen Ansprüche.

Kurze Beschreibung der Figuren:

Figur 1     zeigt das Kennlinienfeld des Detektors.

Figur 2     zeigt die Abweichung von der mittleren Kennlinie.

Figur 3     zeigt die Struktur der adaptiven dynamischen Korrektur.

Figur 4     zeigt ein strukturbild der Identifikation des Abbildungsfehlers.

Figur 5     zeigt ein Strukturbild der Koeffizientenmodifikation.

Figur 6     zeigt ein Strukturbild der Adaption der Offsetkoeffizienten.

Der Kern des Verfahrens ist darin zu sehen, jedes Pixel an eine mittlere Kennlinie des gesamten Detektorarrays anzupassen. Der Abbildungsfehler durch die Inhomogenität des Detektorarrays wird vorher durch Referenzmessungen bestimmt. Jedes Pixel wird individuell durch eine Korrektur mit n Koeffizienten korrigiert. Für die Abweichung der individuellen Pixelkennlinien von der mittleren Kennlinie wird dabei ein Polynom n-ter Ordnung gewählt. Die Koeffizienten werden durch die Methode kleinster Fehlerquadrate bestimmt. Voraussetzung für diese Korrekturmethode ist, daß Wechselwirkungen zwischen den Einzelelementen nicht auftreten, bzw. vernachlässigbar sind, da die Korrektur eines Pixels unabhängig von Nachbarpixeln durchgeführt wird.

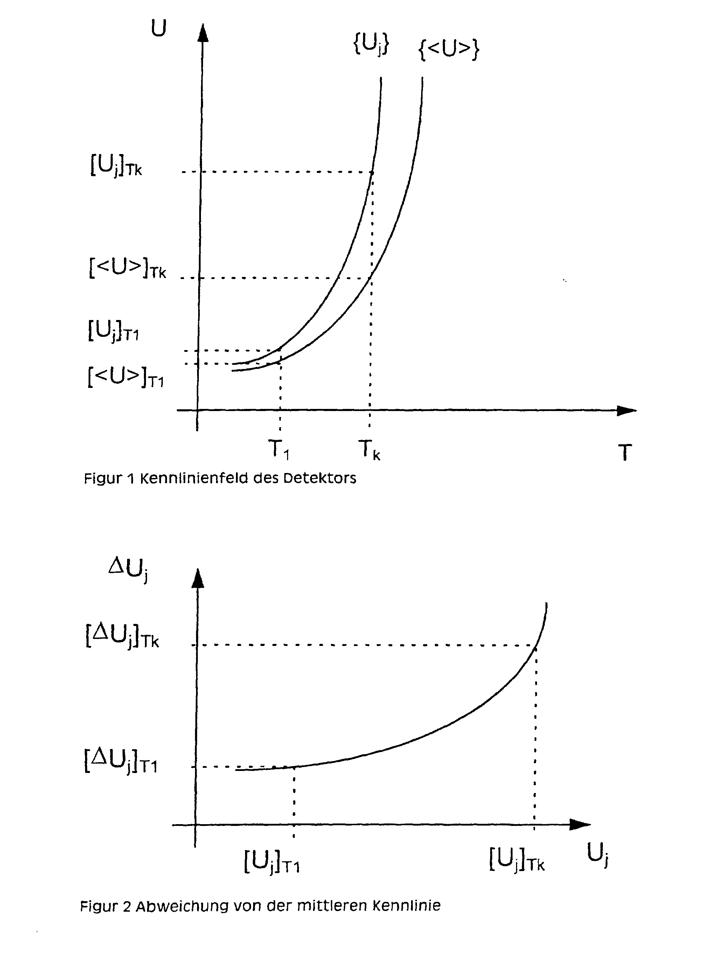

Die Figur 1 zeigt das Kennlinienfeld eines Detektors. Dabei gilt:

$\{U_j\}$:        Pixelindividuelle Kennlinie

$\{<U>\}$:        Mittlere Kennlinie des Arrays

$[U_j]_{Tk}$:        gemittelter Wert über N Messungen bei Temperatur k des Pixels j.

$[<U>]_{Tk}$:     gemittelter Wert über N Messungen bei Temperatur k über alle Pixel

Das Ziel ist die Anpassung aller individuellen Pixel an die mittlere Kennlinie des Arrays gemäss folgender Gleichung.

$$\{U_j^t\} - \{<U>\} \overset{!}{=} \{0\}$$

Für die Abweichung der individuellen Pixelkennlinien von der mittleren Kennlinie wird ein Polynom n-ter Ordnung gewählt:

$$\underline{\Delta U}^a = \underline{a_n} \cdot (\underline{U})^n + \underline{a_{n-1}} \cdot (\underline{U})^{n-1} + \ldots + \underline{a_1} \cdot \underline{U} + \underline{a_0}$$

Die Messung der Kennlinie erfolgt an k Stützstellen. somit ergibt sich die Abweichung von der mittleren Kennlinie bei der Temperatur i:

$$[\Delta U_j]_{T_i} = [<U>]_{T_i} - [U_j]_{T_i}; \qquad \text{mit } i = 1 \ldots k$$

Ein Graph dieser Funktion ist in Figur 2 dargestellt.

Ermittlung der Korrekturkoeffizienten

Die Korrekturkoeffizienten ergeben sich aus der Forderung:

$$\sum_{i=1}^{k} \left( \left[ \Delta U_j^a \right]_{T_i} - [\Delta U_j]_{T_i} \right)^2 \overset{!}{=} Min.$$

Mit dem Ansatz

$$\frac{\partial}{\partial a_m} \sum_{i=1}^{k} \left( \left[ \Delta U_j^a \right]_{T_i} - [\Delta U_j]_{T_i} \right)^2 = 0$$

wobei m=0 .. n
ergibt sich ein lineares Gleichungssystem mit n+1 Gleichungen, wobei z. B. mit Hilfe des Gauß'schen Eliminationsverfahrens die Koeffizienten bestimmt werden können.

Mit den ermittelten Koeffizienten kann die Korrektur der Pixel vorgenommen werden. Es ergibt sich folgende Korrekturgleichung:

$$\underline{U}^k = \underline{U} + \underline{\Delta U}^a = \underline{U} + \underline{a_n} \cdot (\underline{U})^n + \underline{a_{n-1}} \cdot (\underline{U})^{n-1} + \ldots + \underline{a_1} \cdot \underline{U} + \underline{a_0}$$

In der Praxis hat sich ein linearer Ansatz zur Kurvenanpassung als nicht ausreichend herausgestellt. Ein nichtlinearer Ansatz ist daher erforderlich. weiterhin haben sich dafür nicht nur Ansätze mit Polynomentwicklung mindestens 2. Grades, sondern auch andere nichtlineare Ansatze z.B. auf Basis von Exponentialfunktionen als geeignet erwiesen.

Die für der Korrektur jeden Bildpunktes ermittelten Korrekturkoeffizienten werden in einem Speicher eines Bildverarbeitungssystems abgelegt und zur Korrektur der Grauwerte der vom Detektorsystem erzeugten Bilder herangezogen. In einem geeigneten Bildverarbeitungssystern geschieht dies in Echtzeit bei der Darstellung der Bilder auf einem Bildschirm.

Die Ermittlung der Korrekturwerte für die oben beschriebene gobale Korrektur im Ortraum erfolgt im wesentlichen einmalig bei der Kalibrierung der Detektorsysteme an einer thermischen Referenzquelle bei der Herstellung. Auch können Nachkalibrierungen in grösseren Zeitabständen, wie z.B. bei Wartungen vorgenommen werden.

Bei einem nach dem zuvor beschriebenen Verfahren korrigierten Bildes ist ein Driften der Pixelparameter mit großen Zeitkonstanten im Bereich von Minuten bis zu Stunden erkennbar. Für den Betrachter der Bilder erscheint der dadurch entstehende Bildfehler als fixes Ortsrauschen.

Die nachfolgend beschriebenen Verfahrensschritte kompensieren die Abbildungsfehler durch ein adaptives Verbessern der Korrekturkoeffizienten jedes Bildpunktes. Basierend auf der Globalen Korrektur im Ortsraum kann durch eine Anpassung der Koeffizienten auf den Driftvorgang der Pixelparameter reagiert werden.

Das Ziel der dynamischen Korrektur ist es also, den Drifteffekt der Pixelparameter zu kompensieren und eine Neuermittlung der Korrekturkoeffizienten jedes Bildpunktes an einem Referenzobjekt überflüssig zu machen. Die Information über den Abbildungsfehler muß dabei unabhängig von der betrachteten Szene sein, da in die Adaption der Koeffizienten keine Szeneninformation einfließen darf.

Das adaptive dynamische Korrekturverfahren basiert auf einer Selbstanpassung der Korrekturkoeffizienten der globalen stationären Korrektur in regelmäßigen Zeitabständen. Als stationäres Korrekturverfahren wird dabei vorzugsweise die Quadratische Korrektur verwendet. Es können auch andere nichtlineare Ansätze zur Kurvenanpassung verwendet werden. Die dynamische Korrektur stellt eine geschlossene Iterationsschleife aus den Blöcken stationäre Korrektur und Adaption dar, wobei die Adaption aus den Blöcken Identifikation, Entscheidung und Modifikation besteht. Ein durch die gespeicherten Korrektur-Koeffizienten korrigiertes Bild wird zwischengespeichert. Über die Identifikation wird aus dem korrigierten Bild eine Information über den Abbildungsfehler eines Einzelpixels unabhängig von der betrachteten Szene gewonnen. Nach einem Entscheidungsprozeß erfolgt die Modifikation der Koeffizienten mit dem Ziel, daß der Abbildungsfehler möglichst schnell gegen Null konvergiert: $\underline{e} \rightarrow \underline{0}$.

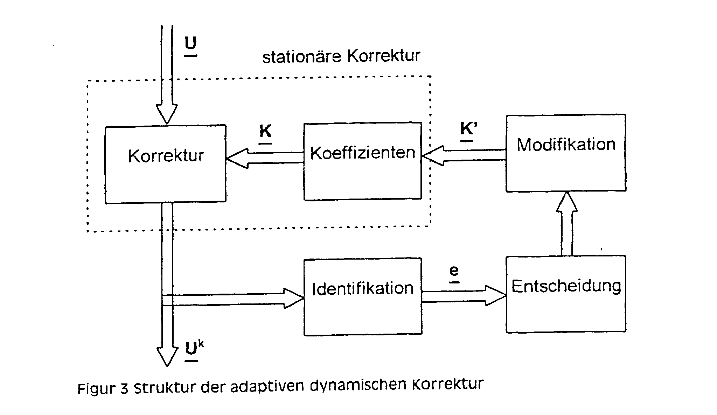

Die Figur 3 zeigt ein Ablaufdiagramm der Struktur der adaptiven dynamischen Korrektur. Dabei sind

U :     Unkorrigiertes Bild

Uk :    Korrigiertes Bild

K :     Korrekturkoeffizienten

e :     Abbildungsfehler

K' :    Modifizierte Koeffizienten

Aufgrund der Art des Abbildungsfehlers (Impulsrauschen) ist eine Information aus dem lokalen Umfeld des jeweiligen Pixels zur Identifikation eines Abbildungsfehlers ausreichend. Dabei muß die Szeneninformation unterdrückt werden, da sie sonst in die Modifikation der Korrekturkoeffizienten einfließt.

Ein 3x3 Medianfilter hat sich beim vorliegenden Ausführungsbeispiel des Verfahrens als lokaler Filteroperator besonders bewährt. Aus der Differenz des Medianwertes zum Pixelwert wird der Abbildungsfehler bestimmt.

Beim Medianfilter werden die Werte aus dem Umfeld des Pixels j zu einer Zahlenreihe $\{U_j^k\}$ der Größe nach sortiert, wobei gilt $U_{m-1}^k < U_m^k < U_{m+1}^k$. Der Medianfilter liefert den Wert, der in der Mitte der Zahlenreihe steht, zurück.

$$\widetilde{U}_j^k = \mathrm{M}\left(\{U_j^k\}\right)$$

mit $U_j^k$ Korrigierter wert des Pixels j und
$\widetilde{U}_j^k$ Medianwert für das Pixel j

Der Abbildungsfehler ergibt sich aus der Differenz des Medianwertes zum Pixelwert:

$$e_j = \widetilde{U}_j^k - U_j^k$$

$e_j$ Abbildungsfehler des Pixels j.

Mit Hilfe des Abbildungsfehlers kann eine Anpassung der Korrekturkoeffizienten vorgenommen werden.

Es ist weiterhin von Vorteil, wenn der Berechnung des Abbildungsfehlers eine zeitliche Mittelung einer Anzahl von Bildern vorrausgeht. Beim vorliegenden Aufführungsbeispiel hat sich eine Mittelung über eine Grössenordnung von ca. 100 Bildern als ausreichend herausgestellt.

Die Anpassung der Korrekturkoeffizienten orientiert sich stark an der implementierten Quadratischen Korrektur.

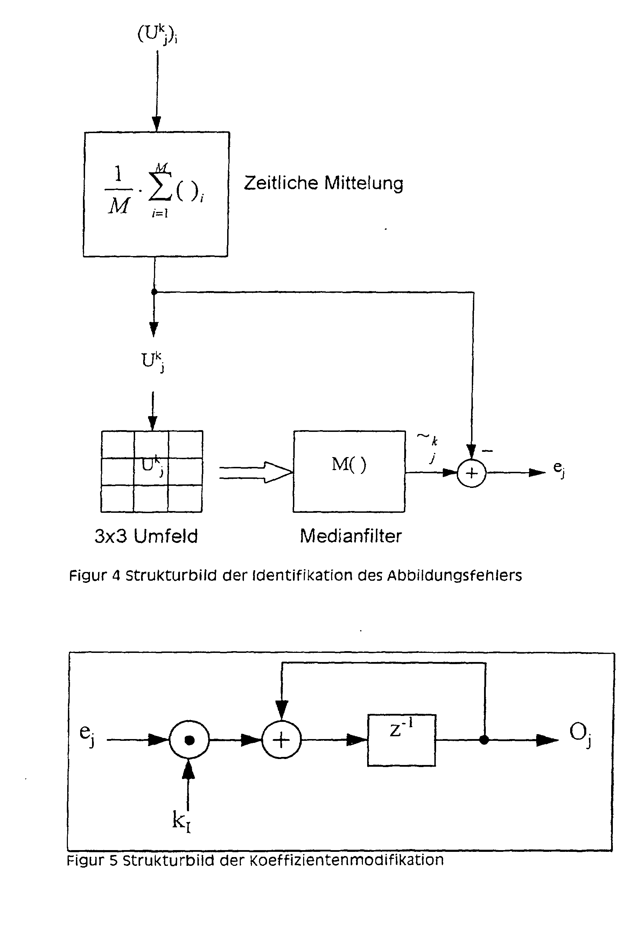

Die Figur 4 zeigt ein Strukturbild der Identifikation des Abbildungsfehlers.

Die Bedingung für eine ideale Identifikation, nämlich keine Information der Szene mitzuliefern, ist real nicht erfüllt. Es hat sich gezeigt, daß vor allem Kanten in den Koeffizienten "eingebrannt" werden, und bei einem Szenenwechsel als Überlagerung erscheinen. Durch Einführung eines Entscheidungsprozesses, der erkennt ob es sich um Kanten oder Impulsrauschen handelt und die Modifikation der Koeffizienten steuert, kann das vermieden werden werden.

Als einfaches Entscheidungskriterium, im folgenden als Update-Kriterium bezeichnet, wird die Streuung des Umfeldes verwendet, das auch für die Berechnung des Medianwertes herangezogen wird. Dabei wird die Sortierung der Zahlenreihe, die bei der Ermittlung des Medianwertes notwendig ist, ausgenutzt.

$$\{U^k_j\} = \{U^k_1, U^k_2, U^k_3, U^k_4, U^k_5, U^k_6, U^k_7, U^k_8, U^k_9\}$$

$$U^k_{m-1} < U^k_m < U^k_{m+1} \quad m = 1 .. 9$$

Die Extremwerte werden für das Entscheidungskriterium ausgenommen. Es gilt dann:

$$\left(K_{up}\right)_j = \sqrt{\frac{1}{7} \cdot \sum_{m=2}^{7} \left(\widetilde{U}^k_j - U^k_m\right)^2} \; ;$$

mit $K_{Up}$ : Entscheidungskriterium

Ein Vergleich zwischen einer Kante und einer Impulsstörung ist in folgender Tabelle als Beispiel vereinfacht dargestellt.

| Kante: | 1000 | 1000 | 2000 |
|---|---|---|---|
| | 1000 | 1000 | 2000 |
| | 1000 | 1000 | 2000 |

Median
$\Rightarrow$ M({ 1, **1, 1, 1, 1, 1, 2, 2**, 2 }·10³) $\Rightarrow K_{Up} = 535$
= 1000 $\qquad$ keine Modifikation

| Impuls: | 1000 | 1000 | 1000 |
|---|---|---|---|
| | 1000 | 2000 | 1000 |
| | 1000 | 1000 | 1000 |

Median
$\Rightarrow$ M({ 1, **1, 1, 1, 1, 1, 1, 1**, 2 }·10³) $\Rightarrow K_{Up} = 0$
= 1000 $\qquad$ Modifikation

Die Entscheidung, ob die Koeffizienten modifiziert werden, wird durch Vergleich des Entscheidungskriterium $K_{up}$ mit einem Schwellwert $K_S$ getroffen. Überschreitet der ermittelte Zahlenwert des Entscheidungskriteriums $K_{up}$ den vorgegebenen Schwellwert $K_S$ so findet keine Änderung des Korrekturkoeffizienten des betrachteten Bildpunktes statt.

$$(K_{Up})_j < (K_S)_l \Rightarrow \textit{Modifikation des Pixels j}$$

$K_S$ Schwellwert für die Modifikation

Dieses einfache Kriterium liefert gute Ergebnisse.

Für die Erhaltung der Bildgüte ist eine Modifikation des Offsetkoeffizienten der Quadratischen Korrektur ausreichend. Die Gain- und Quadratkoeffizienten, welche die Steigung bzw. den nichtlinearen Anteil der Abweichung von der mittleren Kennlinie darstellen, können als zeitkonstant betrachtet werden.

Die einfachste Interpretation des ermittelten Abbildungsfehlers ist die Deutung als Offsetfehler der stationären Korrektur. Mit einem geeigneten Algorithmus ist damit eine Nachführung der Offsetkoeffizienten, die unabhängig von den anderen Koeffizienten sind, möglich. Die Umsetzung liefert gute Ergebnisse und rechtfertigt diese Interpretation.

Zur Verbesserung wird im Ausführungsbeispiel ein Integralregler verwendet, $\dot{u} = k_I \cdot e$. Umgesetzt auf den Offsetkoeffizient ergibt sich (diskretisiert):

$$(O_j)_{n+1} = (O_l)_n + k_l \cdot (e_j)_n$$

mit:

Oj :   Offsetkoeffizient des Pixels j

ej :   Abbildungsfehler des Pixels j

kl :   Gewichtung

Die Figur 5 zeigt ein Strukturbild der Koeffizientenmodifikation.

Bei dem im Ausführungsbeispiel realisierten Verfahren wurde für alle Pixel die selbe Gewichtung des Abbildungsfehlers verwendet. Denkbar wäre eine pixelindividuelle Gewichtung, um die Adaption auf das jeweilige Pixel abzustimmen. Die Gewichtung bestimmt - zusammen mit der Abtastzeit des Update-Zyklus · die Zeitkonstante, mit der auf einen ermittelten Abbildungsfehler reagiert wird. Dabei bedeudet $k_l \rightarrow 1$ schnelle und $k_l \rightarrow 0$ langsame Anpassung.

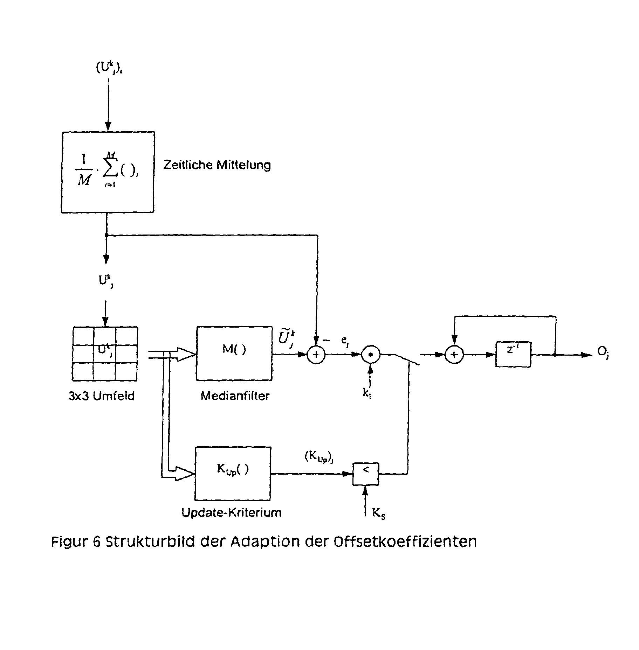

Mit allen Komponenten ergibt sich das in Figur 6 gezeigte Strukturbild der Adaption der Offsetkoeffizienten für den dynamischen Teil des Korrekturverfahrens:

Bei der Realisierung des Korrekturverfahrens hat sich gezeigt, daß zunächst ein hinreichendes, stationäres Korrekturverfahren zu implementieren ist. Eine Quadratische Korrektur hat sich aufgrund der auftretenden Nichtlinearitäten zwischen den Pixelkennlinien als notwendig herausgestellt, damit die Restinhomogenität kleiner als das Zeitrauschen des Detektors wird. Bei der Untersuchung der auftretenden dynamischen Effekte kann ein Driften beobachtet werden, daß sich unter der Voraussetzung der Quadratischen Korrektur als kompensierbar erweist. Durch die Quadratische Korrektur reduzieren sich die durch das Driften entstehenden Inhomogenitäten im wesentlichen auf ein räumliches Impulsrauschen, das durch eine lokale Adaption abgefangen werden kann. Entscheidend ist die Tatsache, daß die Information über die Inhomogenität aus der lokalen Umgebung des Pixels gewonnen werden kann, und nicht eine globale Anpassung wie bei der stationären Korrektur durchgeführt werden muß.

Das Verfahren nach der Erfindung setzt sich aus einem parameteradaptiven Reglerkonzept mit Identifikation, Entscheidungsprozeß und Modifikation zusammen. Das adaptive dynamische Korrekturverfahren ermöglicht es, den Detektor über einen weiten Temperaturbereich zu kalibrieren, wobei die Anpassung an den jeweiligen Arbeitsbereich, der sich üblicherweise nur über wenige Kelvin erstreckt, selbstanpassend durch die Korrektur erfolgt. Ein Problem des Verfahrens bleibt der Rest an Szeneninformation, die bei der Ermittlung des Abbildungsfehlers nicht unterdrückt wird und mit in die Koeffizienten eingeht. Die Folgen sind das Einfrieren von Kanten und eine Verschmierung von Kanten bei langer Betrachtung von fixen Szenen, wobei aber durch die Wahl der Parameter Update-Schwellwert und Gewichtung des Abbildungsfehlers ein tragbarer Kompromiß eingestellt werden kann.

Abschließend läßt sich sagen, daß mit der vorliegenden Erfindung die Möglichkeit einer langzeitstabilen Korrektur von zweidimensionalen Infrarotdetektoren ohne ständige Neukalibration durch eine thermische Referenzquelle erreicht wird.

**Patentansprüche**

**1.**   Verfahren zum Korrigieren der Grauwerte von Bildern einer digitalen Infrarot-Kamera mit einem zweidimensionalen Detektor, wobei die Korrekturkoeffizienten K für jeden Bildpunkt j einmalig bei einer werkseitigen Kalibrierung an einer thermischen Referenzquelle ermittelt werden und in einem Speicher eines Bildverarbeitungssystems abgelegt sind, mit folgenden Verfahrensschritten:

- Erfassen der Grauwerte Uj eines Bildes;
- Korrigieren der Grauwerte Uj des Bildes mit Hilfe der Korrekturkoeffizienten K und zwischenspeichern der korrigerten Grauwerte Ukj;
- Filtern der zwischengespeicherten korrigerten Gauwerte Ukj durch einen lokal wirkenden adaptiven Filter M;
- Bestimmen des verbleibenden Abbildungsfehlers ej mit Hilfe der zwischengespeicherten Grauwerte M (Ukj) des gefilterten korrigerten Bildes;
- Verbessern aller Korrekturkoeffizienten K mit Hilfe des ermittelten verbleibenden Abbildungsfehlers ej;
- Ablegen der verbesserten Korrekturkoeffizienten K im Speicher des Bildverarbeitungssystems.

**2.**   Verfahren nach Anspruch 1, **dadurch gekennzeichnet, daß** zur Kalibrierung folgende Verfahrensschritte aufweist:

- Bestimmen einer mittleren Grauwertkennlinie <U>(T) für den Detektor;
- Bestimmen der Korrekturkoeffizienten K der Grauwertkennlinie $U_j(t)$ an die mittlere Grauwertkennlinie <U>(T) für jeden Bildpunkt j mittels eines nichtlinearen Ansatzes zur Kurvenanpassung
- Ablegen der Korrekturkoeffizienten K im Speicher des Bildverarbeitungssystems zur Korrektur der Grauwerte Uj jedes Bildpunktes während dem Betreiben.

3. Verfahren nach Anspruch 2, **dadurch gekennzeichnet, daß** zur Kurvenanpassung eine Polynomapproximation zweiter Ordnung verwendet wird.

4. Verfahren nach einem der vorangehenden Ansprüche, **dadurch gekennzeichnet, daß** zur adaptiven Filterung ein 3x3 Medianfilter verwendet wird.

5. Verfahren nach einem der vorangehenden Ansprüche, **dadurch gekennzeichnet, daß** der verbleibende Abbildungsfehler ej der Differenz der Grauwerte Ukj des ungefilterten korrigierten Bildes und der Grauwerte F(Ukj) des gefilterten korrigierten Bildes entspricht.

6. Verfahren nach einem der vorangehenden Ansprüche, **dadurch gekennzeichnet, daß** ein zusätzliches Entscheidungskriterium $K_{Up}$ für jedes Pixel erfüllt sein muss, damit eine Verbesserung des jeweiligen Korrekturkoeffizienten erfolgt.

**Claims**

1. A process for correcting the grey scale values of images produced by a digital infrared camera with a two-dimensional detector, the correction coefficients (K) for each picture point (j) being detected once in a workshop calibration to a thermal reference source and stored in a memory of an image processing system, having the following process steps:

   - the acquisition of the grey scale values (Uj) of an image;
   - the correction of the grey scale values (Uj) of the image using the correction coefficients (K) and the buffer storage of the corrected grey scale values (Ukj);
   - the filtering of the buffer-stored corrected grey scale values (Ukj) by a locally acting adaptive filter (M);
   - determination of the remaining image defects (ej) using the buffer-stored grey scale values (M (Ukj)) of the filtered corrected image;
   - the enhancement of all correction coefficients (K) using the remaining detected image defects (ej);
   - the storage of the improved correction coefficients (K) in the memory of the image processing system.

2. A process in accordance with claim 1,
   **characterised in that**
   it comprises the following calibration process steps:

   - the determination of a mean grey scale value characteristic curve (<U>(T)) for the detector;
   - the determination of the correction coefficients (K) of the grey scale value characteristic curve (Uj(t)) to the mean grey scale value characteristic curve (<U>(T)) for each picture point (j) by means of a non-linear approach to curve fitting;
   - the storage of the correction coefficients (K) in the memory of the image processing system for correction of the grey scale values (Uj) of each picture point during operation.

3. A process in accordance with claim 2,
   **characterised in that**
   a second-order polynomial approximation is used for curve fitting.

4. A process in accordance with one of the preceding claims,
   **characterised in that**
   a 3x3 median filter is used for adaptive filtering.

5. A process in accordance with one of the preceding claims,
   **characterised in that**

the remaining image defect (ej) corresponds to the difference between the grey scale values (Ukj) of the unfiltered corrected image and the grey scale values (F(Ukj)) of the filtered corrected image.

**6.** A process in accordance with one of the preceding claims,
**characterised in that**
it is necessary to fulfil an additional criterion ($K_{Up}$) for each pixel in order to improve the corresponding correction coefficient.

## Revendications

**1.** Procédé de correction des valeurs d'échelle de gris d'images d'une caméra infrarouge numérique comprenant un détecteur bidimensionnel, où les coefficients de correction K, pour chaque point d'image j, sont calculés une seule fois lors d'un étalonnage, effectué en usine, au niveau d'une source de référence thermique et sont stockés dans une mémoire d'un système de traitement d'images, comprenant les étapes suivantes :

- la saisie des valeurs d'échelle de gris Uj d'une image ;
- la correction des valeurs d'échelle de gris Uj de l'image, à l'aide des coefficients de correction K et le stockage intermédiaire des valeurs d'échelle de gris corrigées Ukj ;
- le filtrage des valeurs d'échelle de gris Ukj, corrigées et stockées de façon intermédiaire, par un filtre adaptatif M agissant localement ;
- la détermination du défaut résiduel d'imagerie ej à l'aide des valeurs d'échelle de gris M (Ukj), stockées de façon intermédiaire, de l'image corrigée et filtrée ;
- l'amélioration de tous les coefficients de correction K à l'aide du défaut résiduel d'imagerie ej ayant été déterminé ;
- le stockage des coefficients de correction améliorés K dans la mémoire du système 'de traitement d'images.

**2.** Procédé selon la revendication 1, **caractérisé en ce qu'**il présente, pour l'étalonnage, les étapes suivantes :

- la détermination d'une courbe caractéristique moyenne <U>(T) des valeurs d'échelle de gris pour le détecteur ;
- la détermination des coefficients de correction K de la courbe caractéristique Uj(t) des valeurs d'échelle de gris, pour l'adaptation de la courbe à la courbe caractéristique moyenne <U>(T) des valeurs d'échelle de gris pour chaque point d'image j, au moyen d'une mise en équation non linéaire ;
- le stockage des coefficients de correction K dans la mémoire du système de traitement d'images, pour la correction des valeurs d'échelle de gris Uj de chaque point d'image au cours du fonctionnement.

**3.** Procédé selon la revendication 2, **caractérisé en ce que**, pour l'adaptation de la courbe, on utilise une approximation polynomiale de deuxième ordre.

**4.** Procédé selon l'une quelconque des revendications précédentes, **caractérisé en ce que**, pour le filtrage adaptatif, on utilise un filtre médian de 3x3.

**5.** Procédé selon l'une quelconque des revendications précédentes, **caractérisé en ce que** le défaut résiduel d'imagerie ej correspond à la différence existant entre les valeurs d'échelle de gris Ukj de l'image corrigée et non filtrée, et les valeurs d'échelle de gris F(Ukj) de l'image corrigée et filtrée.

**6.** Procédé selon l'une quelconque des revendications précédentes, **caractérisé en ce qu'**un critère de décision supplémentaire $K_{Up}$, pour chaque pixel, doit être rempli, afin que l'on obtienne une amélioration du coefficient de correction respectif.

Figur 1 Kennlinienfeld des Detektors

Figur 2 Abweichung von der mittleren Kennlinie

$\underline{U}$

stationäre Korrektur

$\underline{K}$

Korrektur

Koeffizienten

$\underline{K}'$

Modifikation

$\underline{U}^k$

Identifikation

$\underline{e}$

Entscheidung

Figur 3 Struktur der adaptiven dynamischen Korrektur

$(U^k_j)_i$

$$\frac{1}{M} \cdot \sum_{i=1}^{M} (\ )_i$$

Zeitliche Mittelung

$U^k_j$

$U^k_j$

3x3 Umfeld

M( )

Medianfilter

$\sim^k_j$

−

$e_j$

Figur 4 Strukturbild der Identifikation des Abbildungsfehlers

$e_j$

⊙

+

$z^{-1}$

$O_j$

$k_I$

Figur 5 Strukturbild der Koeffizientenmodifikation

Figur 6 Strukturbild der Adaption der Offsetkoeffizienten